# EUROPÄISCHE PATENTANMELDUNG

(11) **EP 0 783 084 A1**
(43) Veröffentlichungstag der Anmeldung: **09.07.1997**
(21) Anmeldenummer: 96119500.5
(22) Anmeldetag: 05.12.1996
(51) Int. Cl.: F16L 5/02, F16L 57/00

(54) **Kunststoffrohr, insbesondere Schutzmantel aus Kunststoff, für ein durchgehendes Rohr einer Hauseinführung**

(30) Priorität: 05.01.1996 DE 19600261
(71) Anmelder: MANIBS Spezialarmaturen GmbH & Co. KG, D-42859 Remscheid (DE)
(72) Erfinder: Schafstein, Jürgen, 42859 Remscheid (DE)
(74) Vertreter: Mentzel, Norbert, Dipl.-Phys.

(57) **Zusammenfassung**

Wenigstens ein Teilstück des Kunststoffrohres wird aus einem Bausatz zahlreicher, stückweise für sich herstellbarer Ringkörper aufgebaut. Der Ringkörper (20) besitzt an seinem einen Stirnende eine koaxiale Ringnut (21), welche die eine Schließhälfte einer druckknopfartigen Schnappverbindung aufweist. Am gegenüberliegenden Stirnende (24) des Ringkörpers ist ein komplementärer koaxialer Rohrstutzen vorgesehen, welcher die andere Schließhälfte der Schnappverbindung trägt.

## Beschreibung

Kernrohre mit einem sie umgebenden Schutzmantel aus Kunststoff werden vornehmlich als sogenannte Hauseinführungen genutzt, die als Übergang zwischen einer außerhalb des Gebäudes verlegten medienführenden Versorgungsleitung und einem im Inneren des Gebäudes befindlichen Rohrsystem dienen, und das aus der Leitung kommende Medium zu verschiedenen Verbrauchern im Gebäude führen. Als Medium kann z. B. Haushalts-Gas dienen. Eine solche Hauseinführung durchsetzt eine Boden-, Decken-oder Seitenwand des Gebäudes und ihr Schutzmantel kommt mit dem Wandmaterial in Kontakt. Zur guten Verankerung des Schutzmantels ist der Schutzmantel mit einem radialen und bereichsweise axial profilierten Außenumfang versehen. Dieses Profil kann aus radial vorspringenden Bünden mit dazwischen liegenden axialen Abstandsstücken gebildet sein. Die Bünde können ihrerseits einen profilierten Umriß aus Längsrillen aufweisen. Das Kernrohr besteht aus Metall, insbesondere Stahl.

Ein solcher Schutzmantel wird in einer Spritzgußform um das eingelegte Kernrohr herum aus Kunststoff erzeugt. Die bei diesem Spritzgußvorgang verwendete Form hat eine definierte Länge. In Abhängigkeit vom Anwendungsfall sind Hauseinführungen in verschiedener Länge auszubilden, weshalb für die Schutzmäntel entsprechend zahlreiche Spritzgußformen hergestellt, gelagert und wahlweise verwendet werden müssen. Die Herstellung solcher Formen ist sehr kostspielig. Entsprechend dem Bedarf unterschiedlicher Hauseinführungen müssen diese in einem ausreichend großen Lager in den diversen Längen bereit gehalten werden, was hohe Lagerkosten verursacht und unübersichtlich ist. Eine Vorfertigung solcher Schutzmäntel in Form eines kontinuierlichen Schlauches, der dann nur noch in bestimmte Längen geschnitten werden muß, ist nicht möglich. Derartige Schlauchabschnitte benötigen nämlich eine Länge, die sich nicht mehr auf ein Kernrohr axial aufschieben läßt. Darüber hinaus ist die Profilierung des Umfangs vom Schutzmantel, z. B. in Form von zwischen Bünden liegenden Umfangsnuten zu kostenaufwendig. Manche Umfangsprofile müssen nämlich durch eine spanabhebende Nachbearbeitung erzeugt werden.

Der Erfindung liegt die Aufgabe zugrunde, ein vorzugsweise auf seiner Rohraußenfläche beliebig profiliertes Kunststoffrohr zu entwickeln, das einfach und preiswert in jeder gewünschten Länge hergestellt werden kann. Ein solches Kunststoffrohr soll insbesondere als Schutzmantel für ein im Mantelinneren angeordnetes Kernrohr einer Hauseinführung dienen. Dies wird erfindungsgemäß durch die im Kennzeichen des Anspruches 1 angeführten Maßnahmen erreicht, denen folgende besondere Bedeutung zukommt.

Die Erfindung schlägt vor, ein solches Kunststoffrohr aus zahlreichen, jeweils stückweise für sich hergestellten Ringkörpern zusammenzusetzen. Man geht von einem Bausatz solcher Ringkörper aus, die entsprechend der jeweils gewünschten Länge des Kunststoffrohres nachträglich manuell zusammengefügt werden. Die Ringkörper weisen an ihren Enden geeignete Kupplungsteile auf, die paarweise miteinander kompatibel sind. So kann der eine Kupplungsteil aus einer koaxialen Ringnut bestehen, in welcher sich die eine Schließhälfte einer druckknopfartigen Schnappverbindung befindet. Diese Schließhälfte kann z. B. aus einer Schließmatrize in Form einer umlaufenden Rinne bestehen. Der andere Kupplungsteil wird von einem koaxialen Rohrstutzen am anderen Stirnende des gleichen oder eines anderen Ringkörpers gebildet, der die entsprechende andere Schließhälfte der Schnappverbindung trägt. Im vorgenannten Fall würde dies eine Schließpatrize sein, die z. B. aus einem Ringwulst mit Bogenprofil gebildet ist. Zwei benachbarte Ringkörper werden mit ihrem Rohrstutzen und ihrer Ringnut ineinander gedrückt, wobei ihre beidseitigen Schließhälften ineinander schnappen.

Ein solches Kunststoffrohr läßt sich daher in jeder gewünschten Länge aus einem solchen Bausatz von Ringkörpern vormontieren. In der Anwendung auf Hauseinführungen bedeutet dies, daß man die jeweils benötigte axiale Länge des Schutzmantels durch Kuppeln einer entsprechenden Anzahl von Ringkörpern schnell zusammenbauen kann. Zum Zusammenkuppeln der Ringkörper genügt ein kurzer axialer Druck. Der einzelne Ringkörper kann dabei sehr kurz sein und sich nur über einen einzigen Musterrapport des erwähnten Umfangsprofils eines Schutzmantels erstrecken. Solche Ringkörper brauchen nur eine kurze axiale Länge von z. B. 2 bis 3 cm aufzuweisen und lassen sich folglich außerordentlich preiswert und schnell in einer Spritzgußmaschine herstellen. Die Spritzgußform ist dementsprechend einfach, ohne Kernzüge, ausgebildet und daher preiswert herzustellen und leicht zu handhaben.

Der Zusammenbau der Ringkörper zu einem Schutzmantel kann stückweise um ein Kernrohr herum geschehen, wobei dazwischen ohne weiteres eine enge Passung bis hin zur Preßpassung vorliegen kann. Der einzelne Ringkörper ist nämlich so kurz, daß seine Axialverschiebung auf dem Kernrohr trotz der Preßpassung problemlos ausführbar ist. Die in Eingriff stehenden Schließhälften der Schnappverbindung zwischen der miteinander gekuppelten Ringnut und dem Rohrstutzen sichern den Zusammenhalt einer solchen vormontierten Baugruppe. Zwischen den gekuppelten Ringkörpern können Endanschläge wirksam werden, die im Kupplungsfall benachbarte Ringkörper unter eine axiale Vorpressung setzen. Der Ringkörper besteht nämlich aus elastischem Kunststoffmaterial, das für die elastische Schnappverbindung der gekuppelten Schließhälften sorgt. Durch die axiale Vorpressung werden aber auch die radialen Fugen zwischen den gekuppelten Ringkörpern mediendicht geschlossen.

Daher lassen sich aus solchen Ringkörpern auch Kusntstoffrohre zusammenbauen, die, ohne Kernrohr, unmittelbar zur Medienführung genutzt werden können. Auch die Anwendung solcher Kunststoffrohre als Durchlässe für andere Installationsmittel, z. B. elektrische Leitungen, ist ohne weiteres möglich. Der Zusammenbau solcher Kunststoffrohre oder Schutzmäntel für Hauseinführungen od. dgl. braucht nicht vom Rohrhersteller ausgeführt zu werden; dieser braucht lediglich die Ringkörper zur Verfügung stellen. Die Ringkörper werden nachträglich vom Kunden in der entsprechenden Stückzahl zu dem gewünschten Rohr oder Schutzmantel zusammengesetzt.

Weitere Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt. Es zeigen:
- Fig. 1: in Vergrößerung einen Axialschnitt durch einen Ringkörper nach der Erfindung,
- Fig. 2,: in Seitenansicht, ein Teilstück eines aus vier Ringkörpern gemäß Fig. 1 gebildeten Kunststoffrohres, an welchem ein fünfter Ringkörper angekuppelt werden soll,
- Fig. 3: eine abgewandelte Ausführung des in Fig. 1 ausgebildeten Ringkörpers, der ein Endglied eines fertig gekuppelten Kunststoffrohres bilden soll,
- Fig. 4 und 5: in einem, der Fig. 1 entsprechenden Axialschnitt, zwei Endstücke einer Hauseinführung, die eine Vielzahl von solchen miteinander gekuppelten Ringkörpern zeigen, die, als Schutzmantel, ein zentrales Kernrohr umschließen, und
- Fig. 6: eine abgewandelte Ausführung eines Ringkörpers, der zwischen seinen kompatiblen Kupplungsenden ein gekrümmtes Rohrstück aufweist.

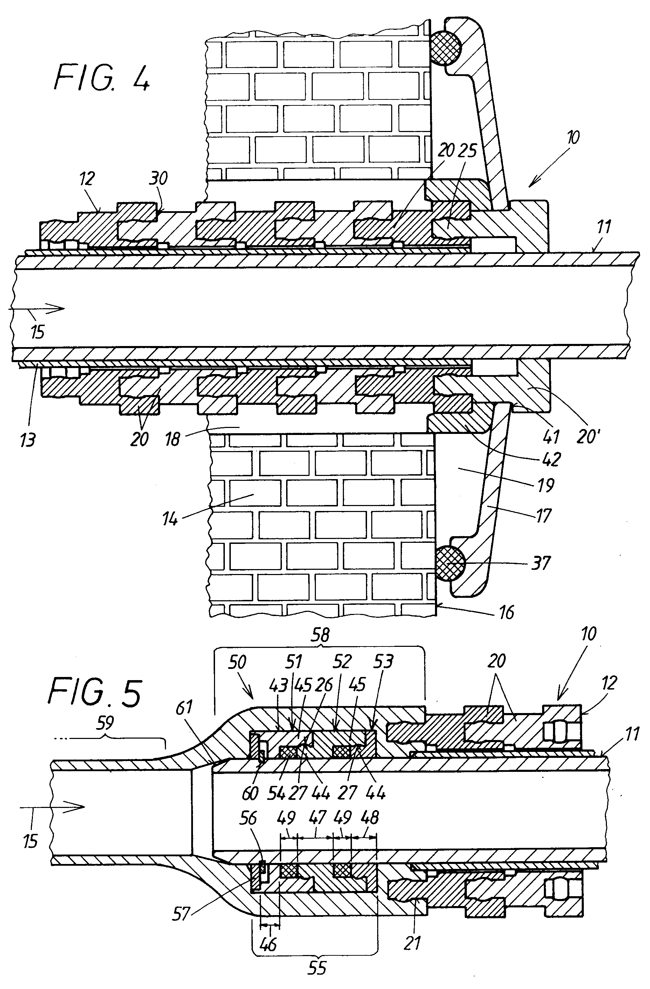

In Fig. 4 und 5 sind die beiden Endstücke einer sogenannten Hauseinführung 10 gezeigt, die einerseits aus einem inneren Kernrohr 11 aus Stahl und andererseits aus einem dieses in Form eines Schutzmantels 12 umschließenden Kunststoffrohr bestehen. Der Stahl des Kernrohres 11 kann mit einer PE-Schicht 13 versehen sein, die eine bessere Anhaftung des mantelförmigen darüber liegenden Kunststoffrohres 12 erlaubt. In der Anwendung als Hauseinführung 10 soll eine Gebäudewand 14 durchsetzt werden, um im Kernrohr 11 ein Medium im Sinne der in Fig. 4 und 5 eingezeichneten Pfeile 15, z. B. Haushaltsgas, von einer Versorgungsleitung aus Kunststoff auf der Außenseite des Gebäudes, durch die Gebäudewand 14 hindurch, auf die Gebäudeinnenseite 16 zu überführen. An der Gebäudeinnenseite 16 ist das metallische Kernrohr 11 an ein weiterführendes metallisches Rohrsystem im Inneren des Gebäudes angeschlossen, das Verbraucher für das strömende Medium 15 führt.

Die Hauseinführung 10 durchsetzt einen Wanddurchbruch 18 und stützt sich an der Gebäudeinnenseite 16 mit einem Flansch 17 ab. Der Flansch 17 schließt einen Vergußraum 19 ein, wo ein bedarfsweise auch den Wanddurchbruch 18 verschließendes Füllmaterial eingebracht werden kann. Im Randbereich kann der Flansch 17 mit geeigneten Dichtungsmitteln 37, z. B. Moosgummi, versehen sein. Die Verbindung des Flansches 17 mit dem Kunststoffrohr 12 erfolgt in besonderer, noch näher zu beschreibender Weise.

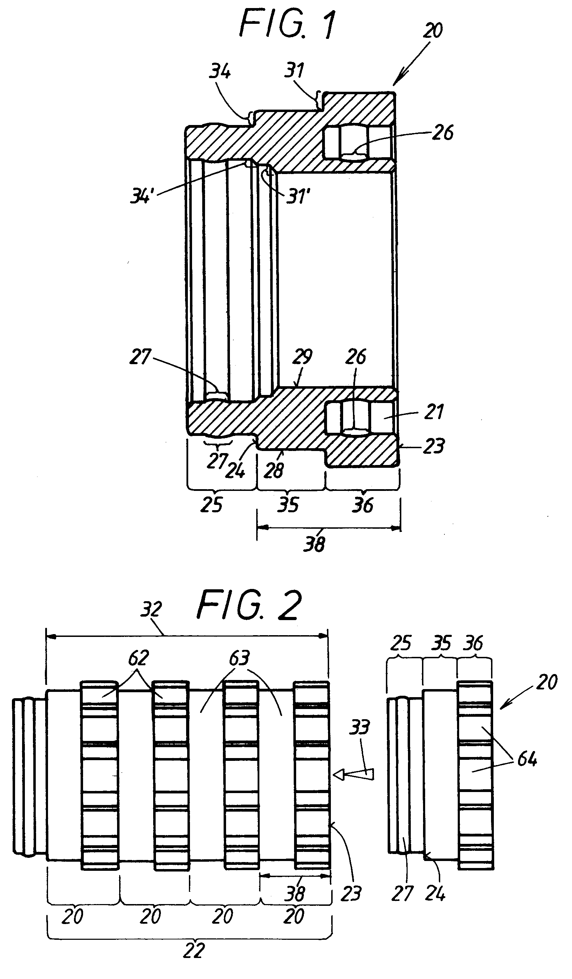

Das hier als Schutzmantel 12 fungierende Kunststoffrohr ist in besonderer Weise ausgebildet, was aus Fig. 1 und 2 zu erkennen ist. In Fig. 2 ist ein Teilstück 22 des Kunststoffrohres gezeigt. Es besteht aus zahlreichen, stückweise für sich hergestellten Ringkörpern 20, die mit ihren Enden kuppelbar sind. Dazu besitzt der Ringkörper 20 an seinem einen Stirnende 23 eine koaxiale Ringnut 21. Am gegenüberliegenden Stirnende 24 sitzt ein zur Ringnut 21 komplementärer koaxialer Rorhstutzen. Darüber hinaus sind diese beiden kompatiblen Kupplungsteile 21, 25 noch mit den beiden Schließhälften 26, 27 einer durckknopfartigen Schnappverbindung versehen, die im vorliegenden Fall auf Seiten des Rohrstutzens 25 aus einer Schließpatrize 27 und im Inneren der Ringnut 21 aus einer Schließmatrize 26 des Druckknopfes gebildet sind. Damit die beiden Schließhälften 26, 27 in jeder Drehlage miteinander schnappwirksam sind, ist die Schließpatrize 27 aus zwei Ringwülsten gebildet, die hier in jeweils radialer Ausrichtung sowohl am Außenumfang 28 als auch am Innenumfang 29 des Ringkörpers 20 sitzen.

Zum Aufbau eines Rohr-Teilstücks 22 gewünschter axialer Länge 32 werden eine entsprechende Anzahl zueinander formgleicher Ringkörper axial ineinander gedrückt. Um die aus Fig. 2 erkennbare axiale Länge 32 zu vergrößern, braucht nur, wie angedeutet, ein weiterer Ringkörper 20 im Sinne des Kupplungspfeils 33 axial an das bereits vormontierte Rohr-Teilstück 22 gedrückt zu werden. Dabei fährt der Rohrstutzen 25 des einen Ringkörpers 20 in eine Ringnut 21 des benachbarten Ringkörpers 20 ein. Dabei kommen die beiden komplementären Schließhälften 26, 27 der zusätzlichen Schnappverbindung miteinander in Eingriff. Der Ringwulst der Schließpatrize 27 greift dann mit seinem Bogenprofil in eine als Schließmatrize fungierende, in der axialen Ringnut 21 radial angeordnete, umlaufende Rinne ein, die ein entsprechendes Bogen-Gegenprofil besitzt. Das Ergebnis ist aus dem in Fig. 4 erkennbaren Kunststoffrohr 12 zu erkennen, wo benachbarte, identische Ringkörper der Deutlichkeit wegen unterschiedlich schraffiert sind.

Der Ringkörper besitzt, wie in Fig. 1 verdeutlicht ist, eine hier von seinem Stirnende 24 gebildete ringförmige Schulter, die als Anschlag 34 für das entsprechende nutseitige Stirnende des benachbarten Ringkörpers 20 dient. Der Ringkörper 20 ist einstückig aus elastischem, spritzgußfähigem Kunststoff gebildet und sein Außenumfangsbereich 28 besonders ausgeprägt. Die axialen Längen der zwischen den ineinander schnappenden Schließhälften 26, 27 sind dabei so bemessen, daß es im Kupplungsfall im Bereich des Anschlags 34 zu einer axialen Verformung des Ringmaterials gegenüber dem Nachbarring kommt. Es entsteht dadurch eine außerordentlich enge, aus Fig. 4 erkennbare Fuge 30, die praktisch mediendicht ist. Daher könnte ein solches Kunststoffrohr 12 auch ohne Kernrohr 11 unmittelbar zur Medienführung od. dgl. genutzt werden.

Wie aus Fig. 1 und 2 ersichtlich, ist der Ringkörper 30 in drei radial unterschiedlich dicke, gestufte Axialabschnitte 25, 35 und 36 gegliedert, wobei diese Stufung 34, 31 vor allem am Außenumfang 28 des Ringkörpers 20 erscheint. Es liegt auch eine Stufung 34', 31' am Innenumfang 29 des Ringkörpers 20 vor, diese braucht aber nicht unbedingt mit der äußeren radial ausgerichtet zu sein. Die innere Stufung 34', 31' ist jedenfalls geringer als diejenige am Außenumfang 28 ausgebildet.

Der Axialabschnitt 36 mit dem maximalen Radialmaß befindet sich an dem die Ringnut 21 aufweisenden Stirnende 23. Der Axialabschnitt 35 mit mittlerem Radialmaß bildet das Mittelstück des Ringkörpers 20. Daran schließt sich dann gleich der Rohrstutzen 25 an, der dann gleichsam den Axialabschnitt mit minimalem Radialmaß bildet. Einer als Anschlag wirkenden Schulter 34 im Außenumfangsbereich 28 ist eine innere Schulter 34' geringerer Höhe zugeordnet, die sich am Innenumfang 29 des Ringkörpers 20 befindet. Während die äußeren Absätze 34, 31 im wesentlichen als steile radiale Stufen ausgebildet sind, können die Stufenübergänge 34', 31' zwischen benachbarten inneren Stufen aus konischen Übergängen bestehen.

Im Ausführungsbeispiel von Fig. 4 und 5 werden im wesentlichen zueinander formgleiche Ringkörper 20 verwendet, die eine übereinstimmende Gesamtlänge aufweisen. Wegen der Kupplungswirkung des Rohrstutzens 25 ist die das Rohr bestimmende effektive Axiallänge 38 eines Ringkörpers 20 nur von der Summe der Einzellängen der beiden Axialabschnitte 35, 36 bestimmt. Diese effektive Länge 38 entspricht einem Muster-Rapport des in besonderer Weise profilierten Umfangsbereichs 28. Bezogen auf das fertig gekuppelte Teilstück 22 von Fig. 2 besteht das Umfangsprofil nämlich aus Bünden 62 und dazwischen liegenden Umfangsnuten 63. Die Bünde 62 können ihrerseits profiliert sein und Axialkanäle 64 aufweisen, die in gleichförmiger Anordnung die Bünde 62 umschließen. Dadurch erhält der Bund 62 das Aussehen eines Zahnkranzes. Die rohrbildende effektive Axiallänge 38 besteht also aus jeweils einem Bund 62 und einer Umfangsnut 63. In einem Bausatz für ein Kunststoffrohr 12 könnten auch Ringkörper mit zueinander unterschiedlicher Axiallänge 38 vorliegen.

Zweckmäßigerweise ist dann ein solcher längerer Ringkörper in seiner effektiven Länge gleich einem ganzzeiligen Vielfachen eines solchen Muster-Rapports 38.

Eine weitere Variante zeigt Fig. 6. Hier ist ein Ringelement 40 gezeigt, welches mit den Ringkörpern 20 der vorbeschriebenen Art ohne weiteres kompatibel ist, weshalb zur Bezeichnung analoger Bauteile die gleichen Bezugszeichen wie im Ausführungsbeispiel von Fig. 1 und 2 verwendet werden. Insoweit gilt die bisherige Beschreibung. Es genügt. lediglich auf die Unterschiede einzugehen. Der Unterschied besteht darin, daß der mittlere Axialabschnitt 35' im Ringelement 40 nicht koaxial zu seinen beiden endseitigen Axialabschnitten 36, 25 ist, die kupplungswirksam sind. Der eine Axialabschnitt 25 bildet den Rohrstutzen und der andere die Ringnut 21. Hier ist das mittlere Ringstück 35' nicht nur länger, sondern auch gekrümmt ausgebildet. Die Krümmung erstreckt sich im vorliegenden Fall über einen 90^{o}-Winkel 39. Deswegen sind die beiden endseitigen, kupplungswirksamen Axialabschnitte 25, 36 zueinander winkelversetzt. Die dort jeweils anzuschließenden weiteren, vorbeschriebenen Ringe 20 kommen daher unter einem rechten Winkel 39 zueinander zu liegen. Es versteht sich, daß ein solches Ringelement 40 auch jeden anderen beliebigen Winkel 39 aufweisen könnte.

In den bisher beschriebenen Ausführungsbeispielen hatten die Ringkörper 20 bzw. das Ringelement 40 stets zueinander komplementäre Kupplungsteile, nämlich einerseits eine Ringnut 21 und andererseits einen Rohrstutzen 25. Es wäre aber auch möglich, an beiden Stirnenden 23, 24 eines Ringkörpers 20 zueinander formgleiche Kupplungsteile vorzusehen, nämlich entweder beidseitig Ringnuten 21 oder beidseitig Rohrstutzen 25. Diese könnten dann jeweils abwechselnd aus zwei unterschiedlichen Sätzen solcher Ringkörper zusammengebaut werden. Es wäre aber auch möglich, solche Ringkörper 20 als dritte und/oder vierte Type eines solchen Bauatzes zu verwenden, um daraus die gewünschten Kunststoffrohre zu erstellen.

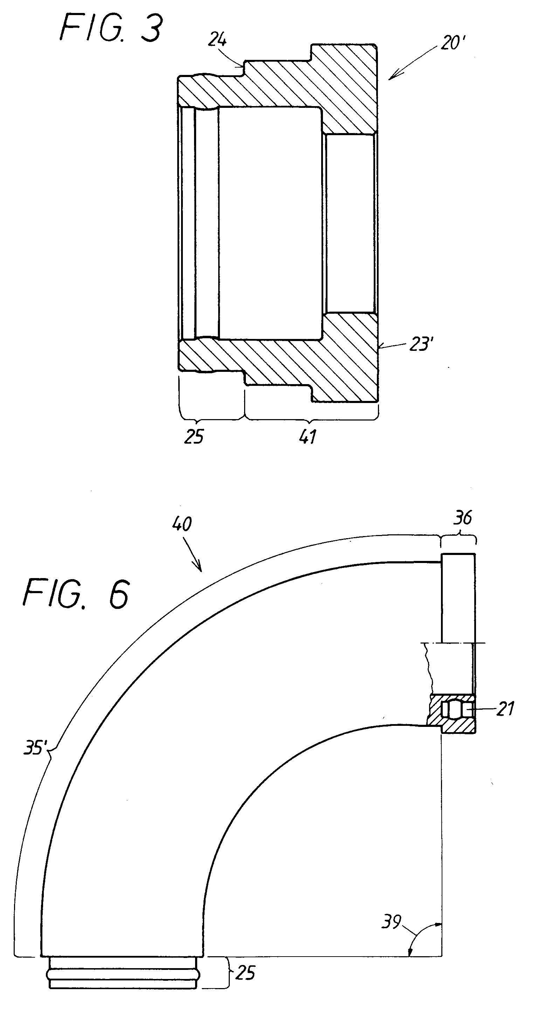

Eine weitere Variante kann darin bestehen, an dem letzten Ringkörper 20' einer Schar von miteinander gekuppelten Ringkörpern 20 jeweils nur ein kupplungsfähiges Ende zu geben. Das ist im Ausführungsbeispiel von Fig. 3 gezeigt. Dieser Ringkörper 20' besitzt nur am einen Stirnende 24 einen Rohrstutzen 25, während das andere Stirnende 23' glatt ist und kein Kupplungselement aufweist. Am anderen Ende des Ringkörpers 20' können stattdessen weitere Funktionsteile 41 für das Kunststoffrohr angeordnet sein, die anderen Zwecken dienen.

Im Falle der Fig. 3 besteht das Funktionselement 41 aus einer einfachen Radialstufe 41, deren Bedeutung aus Fig. 4 erkennbar ist. Dieser Ringkörper 20' dient zur Halterung des eingangs beschriebenen Flansches 17, der sich an der Radialstufe 41 abstützt. Um hier die notwendige Stabilität zu erzeugen, könnte dieser Ringkörper 20' aus besonders festem Material, z. B. Stahl bestehen. Auch in diesem Fall sollte der Ringkörper 20' einstückig ausgebildet sein. Der Stahl des am Ringkörper 20' vorgesehenen Rohrstutzens 25 kann ohne weiteres mit dem davor liegenden Ringkörper 20 aus Kunststoff in der vorbeschriebenen Art zusammenwirken, weil die elastischen Eigenschaften des Kunststoff-Ringkörpers 20 zur Schnapp-Kupplung bereits ausreichen. Bedarfsweise kann im mittleren Abschnitt dieses Ringkörpers 20' auch noch eine Manschette 42 aus elastischem Material vorgesehen sein, die zur endseitigen Abstützung des Kunststoffrohres 12 im Wanddurchbruch 18 dient.

In Fig. 5 ist eine weitere Variante eines solchen endseitigen Ringkörpers 50 gezeigt, der sich an dem gegenüberliegenden Ende der in Fig. 4 und 5 gezeigten Hauseinführung 10 befindet. Es handelt sich in diesem Fall um ein sogenanntes "Spitzende" der Hauseinführung, die auf der Außenseite des Gebäudes an aus Kunststoff bestehenden Versorgungsleitungen anschließbar ist. Auch dieses Spitzende 50 besteht aus Kunststoff und hat folgenden besonderen Aufbau.

Der Ringkörper 50 besitzt eine Kammer 43, in welcher mehrere, in sich gestufte ringförmige Einsätze 51, 52, 53 vorgesehen sind. Diese haben grundsätzlich folgenden übereinstimmenden Aufbau. Zwei der Einsätze 52, 53 besitzen eine Innenstufe 44, welche die eine Schließhälfte 27 einer Schnappverbindung aufweist, die ähnlich wie beim oben beschriebenen Ringkörper 20 aus einem koaxialen Ringwulst besteht. Es liegt dort also eine Schließpatrize 27 vor, die radial nach außen gerichtet ist.

Die Außenstufe 45 der Ringeinsätze 51, 52 besitzt die komplementäre Schließhälfte 26 dieser Schnappverbindung, nämlich die Schließmatrize, die hier als umlaufende Rinne an der Innenfläche der Außenstufe 45 angeordnet ist. Die drei Ringeinsätze 51, 52, 53 sind folglich, in ähnlicher Weise wie die vorbeschriebenen Ringkörper 20, durch axialen Druck ineinander schnappbar. Die Ringeinsätze 51, 52, 53 sind folglich zu einer aus Fig. 5 erkennbaren Baueinheit vormontierbar. Die jeweiligen Innenstufen 44 der drei Ringkörper haben bezüglich ihrer Außenstufen 45 eine kürzere axiale Länge 46, 47, 48, die im Montagezustand der Baueinheit 55 zwei radial nach innen weisende Ringrillen 49 erzeugt. Diese Ringrillen 49 können zur Aufnahme von elastischen O-Ringen 54 dienen.

Neben der Baueinheit kommt ein Sprengring 56 aus Stahl zu liegen, neben dem eine den Kunststoff von der Wand des Spitzendes 50 versteifende ringförmige Scheibe 57 aus Stahl angeordnet ist. Die Ringeinsätze 51 bis 53 bestehen aus besonders wäremresistentem Kunststoff, und zwar vorzugsweise aus POM. Das Spitzende 50 besteht aus Kunststoff, und zwar vorzugsweise aus PEHD, und wird in folgender neuer Verfahrensweise in einer Spritzgußform hergestellt.

Zunächst wird die Baueinheit 55 in der genannten Weise vormontiert, wobei die O-Ringe 54 bedarfsweise auch schon montiert sein können. Die O-Ringe 54 könnten aber auch erst später, nach Herstellung des Spitzendes 50, eingebracht werden. Die Baueinheit 55 wird zusammen mit dem Sprengring 56 und der Scheibe 57 in die Spritzgußform eingebracht, in welcher dann der zur Herstellung der Außenwand vom Spitzende 50 dienende Kunststoff eingefüllt wird. Es entsteht dann ein Produkt mit einem Muffenteil 58 des Spitzendes 50, worin an der Muffeninnenseite die Baueinheit 55 zusammen mit dem Sprengring 56 und der Scheibe 57 sich befinden. An diesen Muffenteil 58 schließt sich ein schlanker Rohrteil 59 des Spitzendes 50 an, der später zum Anschluß des bereits erwähnten Leitungsrohres einer Medien-Versorgungsleitung außerhalb des Gebäudes dient.

An der muffenseitigen Stirnfläche des Spitzendes 50 befindet sich der eine, bereits beschriebene Kupplungsteil für einen Ringkörper 20 des Kunststoffrohres 12, nämlich hier in Form der beschriebenen Ringnut 21. In Fig. 5 ist der Kupplungsfall gezeigt. Das Spitzende 50 mit der darin integrierten Baueinheit 55 läßt sich in besonders einfacher und zuverlässiger Weise mit dem Kernrohr 11 verbinden. Dazu besitzt das Kernrohr, gemäß Fig. 5, eine Außennut 60. Das fertige Spitzende 50 wird auf das Endstück des Kernrohres 11 axial aufgeschoben, wobei eine Zuschärfung 61 an der Rohrkante den Einsteckvorgang erleichtert. Das Endstück des Kernrohres 11 dringt ins Innere des Muffenteils 58 ein, bis der vor der Baueinheit 55 gelagerte Sprengring 56 in seiner Außennut 60 einschnappt. Dann ist der Zusammenhalt zwischen dem Spitzende 50 und dem Kernrohr 11 gesichert. Dieser Ausbildung des Spitzendes 50 kommt eigenständige erfinderische Bedeutung zu, die unabhängig von dem aus Ringkörpern zusammenkuppelbaren Kunststoffrohren anwendbar ist.

### Bezugszeichenliste:

- 10: Hauseinführung
- 11: Kernrohr
- 12: Kunststoffrohr, Schutzmantel
- 13: PE-Schicht
- 14: Gebäudewand
- 15: Pfeil der Medienströmung
- 16: Gebäudeinnenseite
- 17: Flansch
- 18: Wanddurchbruch
- 19: Vergußraum für Füllmaterial
- 20: Ringkörper
- 20': letzter Ringkörper von 12
- 21: Kupplungsteil von 20, Ringnut
- 22: Teilstück von 12
- 23: eines Stirnende von 20
- 23': Stirnwand von 20'
- 24: anderes Stirnende von 20, Absatz
- 25: Kupplungsteil von 20, Rohrstutzen, Axialabschnitt
- 26: eine Schließhälfte an 21, Schließmatrize
- 27: andere Schließhälfte an 25, Schließpatrize, Ringwulst
- 28: Außenumfang von 20
- 29: Innenumfang von 20
- 30: Fuge zwischen 20, 20
- 31: äußere Radialstufe
- 31': innere Radialstufe
- 32: axiale Länge von 22
- 33: Kupplungspfeil (Fig. 2)
- 34: äußere ringförmige Schulter, Anschlag
- 34': innere ringförmige Schulter
- 35: mittlerer Axialabschnitt von 20 mit mittlerem Radialmaß
- 35': gekrümmtes Ringstück (Fig. 6)
- 36: endseitiger Axialabschnitt von 20 mit maximalem Radialmaß
- 37: Dichtungsmittel bei 17
- 38: effektive rohrbildende Axiallänge von 20, Muster-Rapport-Länge
- 39: Winkel zwischen 25, 36 (Fig. 6)
- 40: Ringelement
- 41: Funktionsteil von 20', Radialstufe
- 42: Manschette
- 43: Kammer in 50
- 44: Innenstufe von 52 bzw. 53
- 45: Außenstufe von 51 bzw. 52
- 46: Axiallänge bei 51
- 47: Axiallänge bei 52
- 48: Axiallänge bei 53
- 49: Ringrille zwischen 51, 52 und 53
- 50: endseitiger Ringkörper, Spitzende
- 51: erster gestufter Ringeinsatz
- 52: zweiter gestufter Ringeinsatz
- 53: dritter gestufter Ringeinsatz
- 54: elastischer O-Ring
- 55: Baueinheit aus 51, 52, und 53
- 56: Sprengring
- 57: ringförmige Scheibe
- 58: Muffenteil von 50
- 59: Rohrteil von 50
- 60: Außennut in 11
- 61: Zuschärfung von 11
- 62: Bund an 12
- 63: Umfangsnut an 12
- 64: Axialkanal von 62

## Patentansprüche

1. Kunststoffrohr, insbesondere Schutzmantel (12) aus Kunststoff, für ein im Mantelinneren angeordnetes, durchgehendes Kernrohr (11) einer Hauseinführung,
**dadurch gekennzeichnet**,
daß wenigstens ein Teilstück (22) des Kunststoffrohres aus einem Bausatz zahlreicher, stückweise für sich herstellbarer Ringkörper (20) besteht,
wobei der Ringkörper (20) an seinem einen Stirnende (23) oder an beiden Stirnenden eine koaxiale Ringnut (21) mit der einen Schließhälfte einer druckknopfartigen Schnappverbindung, wie einer Schließmatrize (26), aufweist,
während am gegenüberliegenden Stirnende (24) oder an beiden Stirnenden ein zur Ringnut (21) komplementärer koaxialer Rohrstutzen (25) sitzt, der die andere Schließhälfte der Schnappverbindung, wie eine Schließpatrize (27), trägt,
und der Rohrstutzen (25) und die Ringnut (21) zweier benachbarter Ringkörper (20) paarweise ineinander gedrückt sind und mit ihren jeweiligen, einander ergänzenden Schließhälften (26, 27) in Eingriff stehen.

2. Kunststoffrohr nach Anspruch 1, dadurch gekennzeichnet, daß die beiden Schließhälften (26, 27) der druckknopfartigen Schnappverbindung ein koaxial auf dem Rohrstutzen (25) bzw. in der Ringnut (21) umlaufendes, zueinander komplementäres Profil besitzen.

3. Kunststoffrohr nach Anspruch 2, dadurch gekennzeichnet, daß die Schließpatrize (27) der Schnappverbindung aus einem Ringwulst mit Bogenprofil und die Schließmatrize (26) aus einer umlaufenden Rinne mit einem Bogen-Gegenprofil besteht.

4. Kunststoffrohr nach einem oder mehreren der Ansprüche 1 bis 3, dadurch gekennzeichnet, daß die Ringkörper (20) zueinander formgleich gestaltet sind.

5. Kunststoffrohr nach einem oder mehreren der Ansprüche 1 bis 3, dadurch gekennzeichnet, daß wenigstens einige der Ringkörper (20) eine zueinander unterschiedliche Axiallänge (32) aufweisen.

6. Kunststoffrohr nach einem oder mehreren der Ansprüche 1 bis 5, dadurch gekennzeichnet, daß das zwischen den beiden kompatiblen Enden eines Ringkörpers (20') befindliche Axialstück (35') in sich gekrümmt verläuft, (Fig. 6).

7. Kunststoffrohr nach einem oder mehreren der Ansprüche 1 bis 6, dadurch gekennzeichnet, daß der Ringkörper (20) aus drei radial unterschiedlich gestuften Axialabschnitten (25; 35, 36) besteht, wobei der Axialabschnitt (36) mit maximalem Radialmaß die Ringnut (21) aufweist, woran sich ein Axialabschnitt (35 mit mittlerem Radialmaß anschließt, gegenüber welchem der dann folgende Rohrstutzen (25) radial abgesetzt (24, 24') ist und den Axialabschnitt mit minimalem Radialmaß bildet.

8. Kunststoffrohr nach Anspruch 7, dadurch gekennzeichnet, daß die Stufung (24, 31) zwischen den Axialabschnitten (35, 36) im wesentlichen durch Absätze am Außenumfang (28) des Ringkörpers (20) erzeugt ist.

9. Kunststoffrohr nach Anspruch 7 oder 8, dadurch gekennzeichnet, daß die insbesondere am Innenumfang (29) des Rohrkörpers (20) vorgesehene Stufung (34', 31') konische Übergänge zwischen zwei Axialabschnitten aufweist.

10. Kunststoffrohr nach einem oder mehreren der Ansprüche 1 bis 9, dadurch gekennzeichnet, daß der Ringkörper (20) am Außen- und/oder Innenumfang (28, 29) einen ringförmige Schulter (34) aufweist, die im Kupplungsfall als Anschlag für das Stirnende (23) des gekuppelten benachbarten Ringkörpers (20) dient.

11. Kunststoffrohr, das als Schutzmantel (12) für ein medienführendes Kernrohr (11) in einer sogenannten Hauseinführung (10) dient und einen radial und ggf. bereichsweise axial profilierten Außenumfang (28) aufweist, nach einem oder mehreren der Ansprüche 1 bis 10, **dadurch gekennzeichnet**, daß der Ringkörper (20) jeweils einen vollen Rapport (38) vom profilierten Außenumfang (28) des Schutzmantels (12) oder ein ganzzeilig Vielfaches davon umfaßt und daß der Schutzmantel (12) in frei wählbarer Länge, jeweils vor dem Einführen des Kernrohres (11), aus einer entsprechenden Anzahl von Ringkörpern (20) vormontierbar ist.

12. Kunststoffrohr, das als Schutzmantel (12) einer Hauseinführung (10) dient und an seinem Außenumfang (28) profilierte Bünde (62) mit dazwischen liegenden glatten, axialen Umfangsnuten (63) aufweist, nach Anspruch 11, **dadurch gekennzeichnet**, daß die Bünde (62) jeweils am die Ringnut (21) aufweisenden Endabschnitt (36) der einzelnen, miteinander gekuppelten Ringkörper (20) sitzen, während die Umfangsnuten (63) vom mittleren Axialabschnitt (35) der einzelnen Ringkörper (20) bestimmt sind und sich bis zum endseitigen Rohrstutzen (25) des Ringkörpers (20) erstrecken.

13. Kunststoffrohr nach einem oder mehreren der Ansprüche 1 bis 12, dadurch gekennzeichnet, daß die Ringkörper (20, 20') einstückig ausgebildet sind und wenigstens einige (20) davon aus elastischem Material, wie Kunststoff, bestehen.

14. Kunststoffrohr nach einem oder mehreren der Ansprüche 1 bis 13, dadurch gekennzeichnet, daß der letzte (20', 50) der miteinander gekuppelten Schar von Ringkörpern (20, 20', 50) jeweils nur ein kupplungsfähiges Ende mit einer Ringnut (21) und ihrer Druckknopf-Schließhälfte (26) oder mit einem Rohrstutzen (25) mit seiner Druckknopf-Schließhälfte (27) besitzt, während am anderen Ende des Ringkörpers (20', 50) weitere Funktionsteile (41, 59) des Kunststoffrohres (12) sitzen, wie Flansche (17) oder Rohrteile (59) sogenannter Spitzenden (50) einer Hauseinführung (10).

15. Kunststoffrohr nach Anspruch 14, dadurch gekennzeichnet, daß der als Spitzende (50) ausgebildete Ringkörper im Ringinneren eine Kammer (43) zur Aufnahme mehrerer, in sich gestufter Ringeinsätze (51, 52, 53) aufweist, die ihrerseits durch zwei zueinander komplementäre Schließhälften (26, 27) einer Schnappverbindung, nämlich einer Schließ-Patrize (27) und einer Schließmatrize (26), zu einer gekuppelten Baueinheit (55) vormontierbar sind,
daß die Stufen (44, 45) zweier ineinandergefügter Ringeinsätze (51, 52, 53) eine zueinander unterschiedliche axiale Länge (46, 47, 48) aufweisen und zwischen sich wenigstens eine radial nach innen weisende Ringrille (49) zur Aufnahme von elastischen O-Ringen (54) bilden,
und daß die vormontierte Baueinheit (55) im Muffenteil (58) des aus spritzgußfähigem Material, wie Kunststoff gebildeten Spitzendes (50) ihre Kammer (43) selbst erzeugt, indem der Muffenteil (58) und ein Rohrteil (59) des Spitzendes (50) nachträglich um die Baueinheit (55) herumgespritzt wird.
